(19) Europäisches Patentamt
European Patent Office
Office européen des brevets

(11) **EP 4 674 580 A1**

(12) **EUROPEAN PATENT APPLICATION**
published in accordance with Art. 153(4) EPC

(43) Date of publication:
07.01.2026 Bulletin 2026/02

(21) Application number: 24763834.9

(22) Date of filing: 26.02.2024

(51) International Patent Classification (IPC):
*B25J 15/08* (2006.01)    *B25J 9/16* (2006.01)
*G06N 3/0442* (2023.01)    *G06N 3/0455* (2023.01)
*G06N 3/0985* (2023.01)    *G06N 20/00* (2019.01)

(52) Cooperative Patent Classification (CPC):
B25J 9/16; B25J 15/08; G06N 3/0442;
G06N 3/0455; G06N 3/0985; G06N 20/00

(86) International application number:
PCT/JP2024/006796

(87) International publication number:
WO 2024/181354 (06.09.2024 Gazette 2024/36)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 01.03.2023 JP 2023031440
06.06.2023 JP 2023093498

(71) Applicants:
• OMRON Corporation
Kyoto 600-8530 (JP)
• Keio University
Tokyo, 108-8345 (JP)

(72) Inventors:
• ISHIKAWA, Reina
Yokohama-shi, Kanagawa 223-8522 (JP)
• YAGAWA, Rinto
Yokohama-shi, Kanagawa 223-8522 (JP)
• SAITO, Hideo
Yokohama-shi, Kanagawa 223-8522 (JP)
• HAMAYA, Masashi
Tokyo 113-0033 (JP)
• HASHIMOTO, Atsushi
Tokyo 113-0033 (JP)
• TANAKA, Kazutoshi
Tokyo 113-0033 (JP)

(74) Representative: SONN Patentanwälte GmbH & Co
KG
Riemergasse 14
1010 Wien (AT)

(54) **CONTROL DEVICE, CONTROL METHOD, AND CONTROL PROGRAM**

(57) Technology disclosed herein trains a model using reusable objects to enable gripping of various fragile objects.

A control device uses plural reusable objects to acquire observation values in a specific fracture process for each of the objects as training data, and apply a machine learning method corresponding to domain generalization through meta-learning using the training data to train a prediction model for predicting a timing at which a specific effect will occur in a target object.

FIG.7

**Description**

Technical Field

The present disclosure relates to a control device, a control method, and a control program.

Background Art

There is technology capable of gripping a target object using a gripper provided to a robot by controlling a gripping force according to the target object.

For example, Patent Document 1 (Japanese Patent Application Laid-Open (JP-A) No. 2019-188587) discloses a robot control device that, for gripping a soft target object, acquires a surface area of the target object from image data obtained by imaging the target object, and by supplying air pressure according to the acquired surface area, controls a gripper so as to bend according to the air pressure, and changes a separation between griping portions of the gripper, or gripping force of the gripper.

However, sometimes robots for gripping target objects are configured specialized according to particular target objects, such as by performing control of gripping force for gripping a soft target object or by being provided with specialized grippers to grip a soft target object.

Moreover, when performing control of gripping force according to the target object sometimes the softness characteristics of a target object are different even though the target object is the same (for example, depending on the degree of ripeness of a vegetable, fruit, or the like).

This means that it has not been possible to grip various fragile objects without specialized soft grippers and without causing damage.

SUMMARY OF INVENTION

Technical Problem

An object of technology disclosed herein is to provide a control device, a control method, and a control program that are capable of training a model using a reusable object, and capable of gripping various fragile objects.

Solution to Problem

In order to achieve the above object, a control device according to a first aspect of the present disclosure uses plural reusable objects to acquire observation values in a specific fracture process for each of the objects as training data, and apply a machine learning method corresponding to domain generalization through meta-learning using the training data to train a prediction model for predicting a timing at which a specific effect will occur in a target object.

In a control device according to a second aspect, training of the prediction model employs detection results of time series data of observation values acquired from each of the objects as the training data, pre-trains a prediction model using a time series network, designates output of an encoder of the time series network as a compressed fully-connected layer, and in meta-learning fixes parameters of the encoder and updates parameters of the fully-connected layer.

In a control device according to a third aspect, at least two or more types of block that are reusable by re-assembling, a ping-pong ball that is reusable by returning to shape by expanding by heating, and a jelly that is reusable by heating and cooling are employed as the plural reusable objects to acquire the observation values as the training data.

In a control device according to a fourth aspect, the two or more types of block have plural different shapes for each type for collection as the training data.

In order to achieve the above object, a control method according to the present disclosure is processing executed by a computer including using plural reusable objects to acquire observation values in a specific fracture process for each of the objects as training data, and applying a machine learning method corresponding to domain generalization through meta-learning using the training data to train a prediction model for predicting a timing when a specific effect will occur in a target object.

In order to achieve the above object, a control program according to the present disclosure causes a computer to execute processing including using plural reusable objects to acquire observation values in a specific fracture process for each of the objects as training data, and applying a machine learning method corresponding to domain generalization through meta-learning using the training data to train a prediction model for predicting a timing when a specific effect will occur in a target object.

The present disclosure trains a model using reusable objects so as to enable various fragile objects to be gripped.

BRIEF DESCRIPTION OF DRAWINGS

Fig. 1 is an example of plural reusable objects.

Fig. 2 is a configuration diagram of a robot system according to an exemplary embodiment.

Fig. 3 is a functional configuration diagram related to a control device 30.

Fig. 4 is an example of time series data of contact forces acquired for plural objects.

Fig. 5 is an example of time series data of contact forces acquired for plural objects.

Fig. 6 is a graph illustrating an example of time series data of predicted contact force.

Fig. 7 is a schematic diagram illustrating an example of an encoder/decoder model.

Fig. 8 is a block diagram illustrating a hardware configuration of a control device.

Fig. 9 is a flowchart illustrating a flow of processing to train a prediction model using a control device.

Fig. 10 is an actual robot employed in testing.

Fig. 11 is an actual robot when various reusable objects are gripped.

Fig. 12 is an actual robot when various food products are gripped.

Fig. 13 is a diagram illustrating snapshots during picking successes, and is a diagram confirming which food products a robot picked.

Fig. 14 is a diagram illustrating a shape of each toy block employed in testing.

Fig. 15 is a diagram illustrating a shape of each toy block employed in testing.

DESCRIPTION OF EMBODIMENTS

Description follows regarding an example of an exemplary embodiment of the present disclosure, with reference to the drawings. Note that the same reference numerals will be appended across the drawings to the same or equivalent configuration elements and parts. Moreover, dimensions and proportions in the drawings are exaggerated for ease of explanation, and sometimes differ from actual proportions.
Firstly, an outline of the present exemplary embodiment will be described. Robotic picking is not easy due to food products being easily squashed. This means that even presetting the physical characteristics of a food product has not proved effective in robotic control due to the diversity within and between categories. Prior research by the inventors of the present application has been able to partly overcome this problem by employing trained fracture prediction using tactile sensors. However, although the method of the prior research has clearly demonstrated that food product picking can be implemented using destructive testing of objects, in this method a model has been trained for each food product in order to accommodate within-category differences. This means that when model training, the model needs to be adjusted for each food product, and the destruction of many food products within a category is required, leading to an undesirable volume of food product expenditure. Furthermore, the expenditure of food products as required for training is not desirable either economically or from an environmental perspective.
The present exemplary embodiment accordingly proposes a new framework for learning a food product picking task without food product expenditure. The present exemplary embodiment proposes a method that does not employ a category specific model trained by expending a large amount of food products of each category in order for a robot to be able to grip plural unknown food product categories. The method of the present exemplary embodiment assumes that there is a model specialized for a category. The proposed method of the present exemplary embodiment does not employ food products, and instead obtains a training data set by training a model using easily squashed non-food products that are reusable many times. An assumption is made here that an easily squashed non-food product object can be found that is similar to the target food product.

Moreover, a key idea is using the experience of object destruction for a number of reusable easily squashed objects instead of expending actual food products while making picking capability object invariant using domain generalization (DG). Moreover, domain generalization technology through meta-learning can be adopted to compensate for gaps between reusable non-food product objects and target actual food product objects. Domain generalization maximizes generalized capabilities of a model by making use of diverse training data, and so a realistic assumption is that a network is able to predict fracture of an unknown food product object without additional training.

In the present exemplary embodiment, a model is trained using plural reusable objects selected from three typical fracture types (cracking, tearing, pulverization). Moreover, in a test of a method of the present exemplary embodiment, a model is tested using four categories of actual food product object. Tofu, banana, potato chip, and tomato were selected as unknown food product objects used in tests. The test results indicated that combining the experience of the fracture of reusable objects with domain generalization is effective for robotic food product picking tasks.

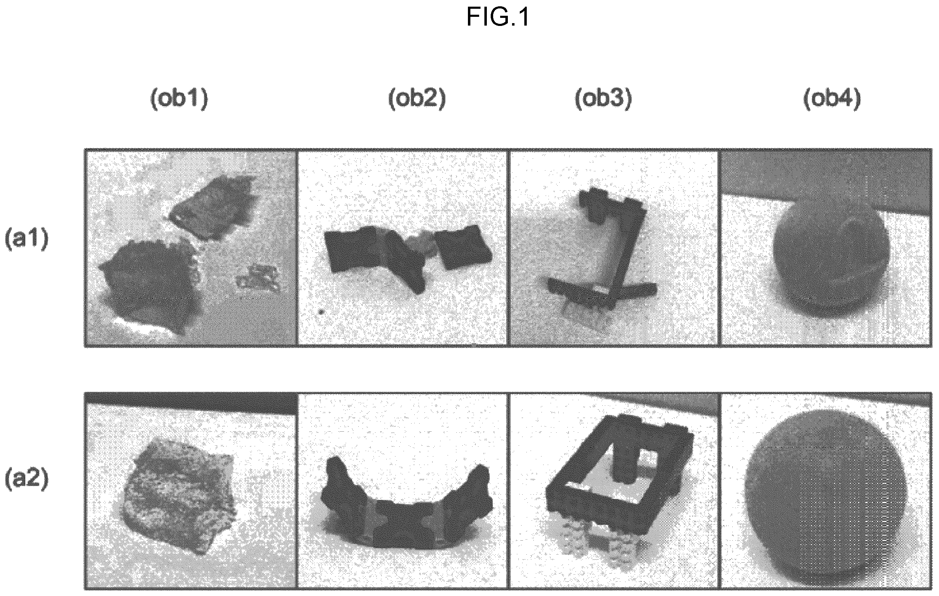

A jelly, two types of toy block (hereinafter simply referred to as blocks), and a ping-pong ball were, as an example, employed as the plural reusable objects of the present exemplary embodiment (hereinafter simply referred to as objects). Fig. 1 is an example of plural reusable objects. In Fig. 1, the plural reusable objects are arranged in a comparison of when fractured (a1) against when reconstituted (a2), and are jelly (ob1), blocks (ob2) and (ob3), and a ping-pong ball (ob4). The objects employed for training can be simply returned to their original shape to enable reuse by performing a regenerative treatment thereon according to the type of object, such as rearranging the blocks, heating the ping-pong ball, and melting and then cooling the jelly. The two or more block types are reusable by being reassembled. The ping-pong ball is reusable by being returned to shape by expansion under heating. The jelly is reusable by being heated and cooled.

Configuration According to Robot System 10

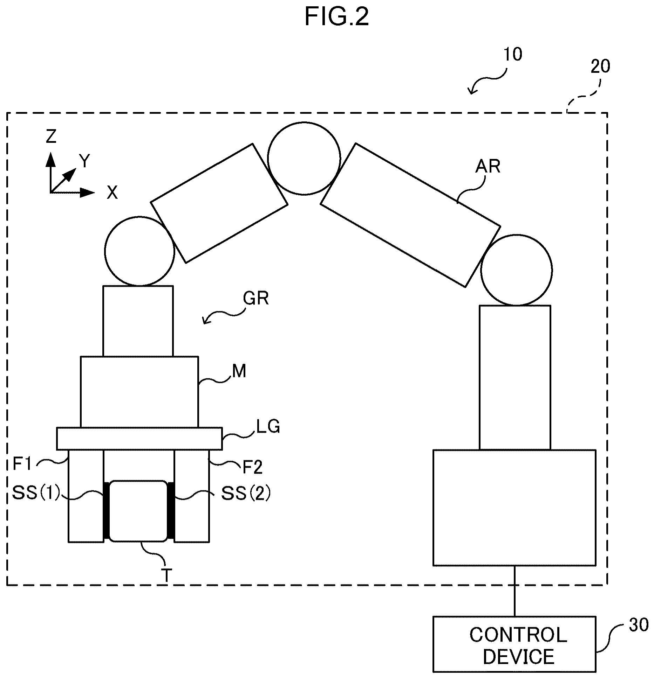

Next, description follows regarding a configuration of a robot system of the present exemplary embodiment. Fig. 2 is a configuration diagram of a robot system 10 according to the present exemplary embodiment. As illustrated in Fig. 2, the robot system 10 includes a robot 20 and a control device 30. The robot system 10 functions as a picking device for picking an object T in the present exemplary embodiment. Note that plural of the above reusable objects are employed as the object T in the training of a prediction model, described later.

The robot 20 includes a robot arm AR, and a gripper GR attached to a distal end of the robot arm AR, as functional sections that are the targets of motion control when performing a picking action.

The gripper GR includes two fingers, fingers F1 and F2, for gripping the object T, serving as an example of a target object. Note that although explanation in the present exemplary embodiment is of a case in which the number of fingers is two, the number of fingers is not limited to being two, and three or more fingers may be provided. Moreover, although the fingers F1, F2 are configured as plate shaped members as an example in the present exemplary embodiment, the shape of the finger F1 and the finger F2 is not limited thereto.

Moreover, the gripper GR includes a motor M to drive at least one finger from out of the finger F1 and the finger F2 as a drive finger. The motor M is connected to a linear guide LG. The linear guide LG includes a conversion mechanism to convert rotational motion of the motor M into linear motion. The gripper GR, the finger F1, and the finger F2 are an example of an end effector.

The finger F1 and the finger F2 are attached to the linear guide LG. The linear guide LG is driven by the motor M, and converts rotational motion of the motor M having a rotation axis along an Z axis into a linear motion along an X axis direction.

Specifically, for example in cases in which the motor M is rotated in a forward direction, the linear guide LG drives the finger F1 and the finger F2 in a closing direction, namely in a direction to grip the object T. On the other hand, when the motor M is rotated in the reverse direction, the linear guide LG drives the finger F1 and the finger F2 in an opening direction, namely in a direction to release the object T. Note that although in the present exemplary embodiment explanation is given for an example of a configuration in which the finger F1 and the finger F2 are both driven at the same time when the motor M is rotated, a configuration may be adopted in which only one finger from out of the finger F1 and the finger F2 is driven. Namely, although in the present exemplary embodiment explanation is given of cases in which the drive fingers are both of the finger F1 and the finger F2, the drive finger may be only one out of the finger F1 and the finger F2.

Moreover, the gripper GR includes a motor drive section 21 to drive the motor M (see Fig. 2). The motor drive section 21 drives the motor M at a uniform speed until an instruction to stop is received from a control section 35, described later.

A tactile sensor S1 and a tactile sensor S2 are respectively provided to gripping surfaces of the finger F1 and the finger F2. The tactile sensor S1 and the tactile sensor S2 detect contact forces that the tactile sensor S1 and the tactile sensor S2 receive from the object T when the object T has been gripped by the finger F1 and the finger F2.

Note that the tactile sensors S according to the present exemplary embodiment will be described for an embodiment in which they are distributed tactile sensors, however there is no limitation thereto. The tactile sensors S may each be a single point tactile sensor. Moreover, in the present exemplary embodiment, a configuration will be described for a case configured by the tactile sensors S provided to both the finger F1 and the finger F2, namely, a case in which both the finger F1 and the finger F2 are tactile fingers, however there is no limitation thereto. In the present exemplary embodiment a configuration may be adopted in which just one out of the finger F1 and the finger F2 is provided with a tactile sensor S.

The contact force referred to here is a reaction force to the gripping force, and has the same magnitude and opposite direction to the gripping force. The gripping force is a force imparted to the object T by the drive finger or the tactile finger. Note that in the present exemplary embodiment, in cases in which the finger F1 and the finger F2 directly contact each other without gripping an object T and force is imparted from one finger to the other, the force imparted to the other finger is also called a gripping force. Moreover, although the gripping force is generated for each of the finger F1 and the finger F2, the gripping forces of the finger F1 and the finger F2 are taken as being of the same magnitude and opposite direction to each other, with the influence of gravity not considered.

The robot 20 employed is, as an example, a vertical articulated robot, horizontal articulated robot, or the like having six degrees of freedom, however the number of degrees of freedom and type of robot are not limited thereto.

Configuration According to Control Device 30

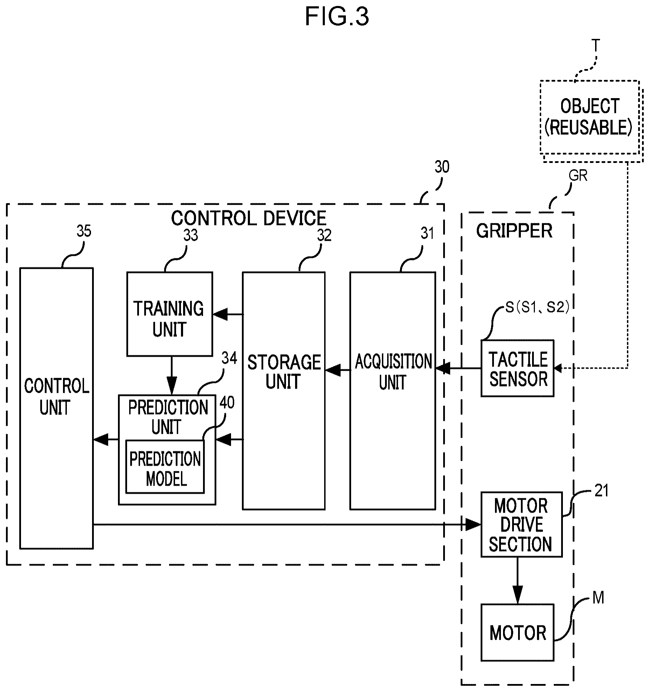

The control device 30 controls the robot 20. As in an example illustrated in Fig. 3, the control device 30 includes, from a functional perspective, an acquisition unit 31, a storage unit 32, a training unit 33, a prediction unit 34, and a control unit 35. The prediction unit 34 also stores a prediction model 40 that has been subjected to machine learning for predicting a time when damage occurs. Moreover, training of the prediction model 40 is performed in the training unit 33 using plural reusable objects T as the targets used for learning.

The acquisition unit 31 employs the tactile sensor S1 and the tactile sensor S2 to acquire, at each of predetermined time periods, the contact force received from the object T for each of the plural objects T.

The storage unit 32 stores, as detection results, the contact forces acquired by the acquisition unit 31 for each respective run of the robot 20. Note that the detection results of contact force are respective time series data of contact forces obtained when each of the objects T has been damaged, such as by destruction or deformation, by the gripper GR. The detection results referred to here are an example of an "effect result", and damage to the object T, such as by destruction or deformation, is an example of a "specific effect".

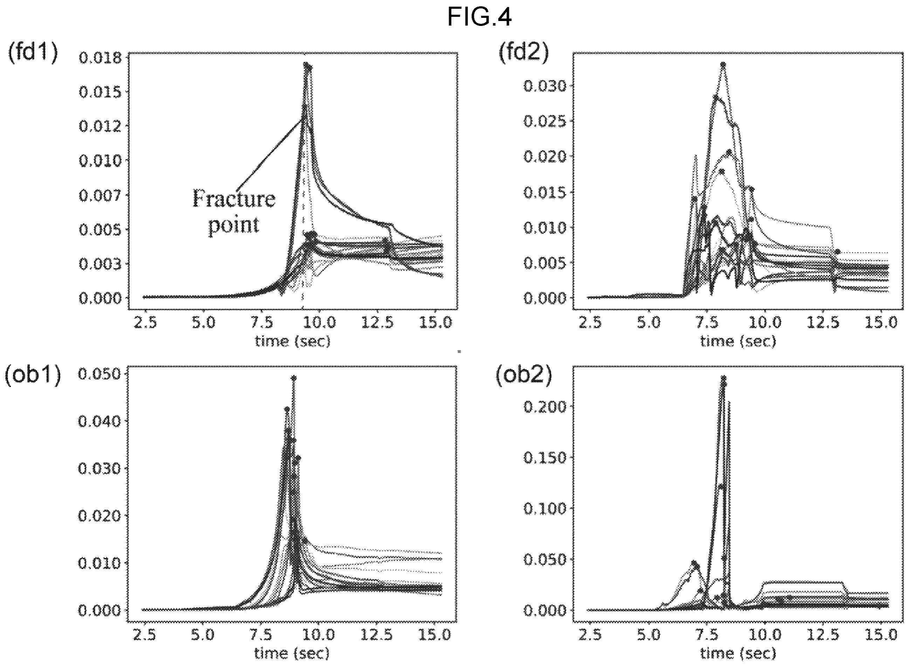

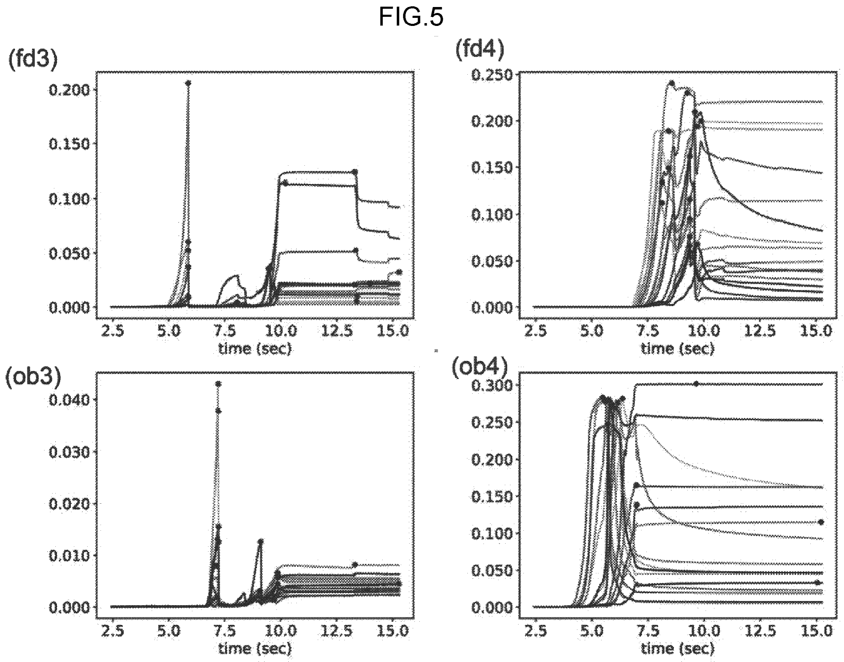

Fig. 4 and Fig. 5 are examples of time series data of contact forces acquired for plural objects T. Fig. 4 and Fig. 5 illustrate time series data of tactile signals when the robot 20 squashes a food product (top) and when a robot squashes a reusable object (bottom). Time is indicated along the horizontal axis, and a norm of a tri-axial force signal is indicated along the vertical axis. The timing of a first most force peak (dashed line) in the time series data is defined as being a fracture time. The time series data are for tofu (fd1), for banana (fd2), for potato chip (fd3), and for tomato (fd4). The contact forces arranged above and below each other have comparative relationships to each other. Similar waveforms arise in the time series data of jelly (ob1) and tofu, blocks (ob2) and banana, blocks (ob3) and potato chip, and ping-pong ball (ob2) and tomato. In this manner, training data capable of corresponding to various food product can be acquired by acquiring time series data from reusable objects having similar waveforms to when food products are fractured.

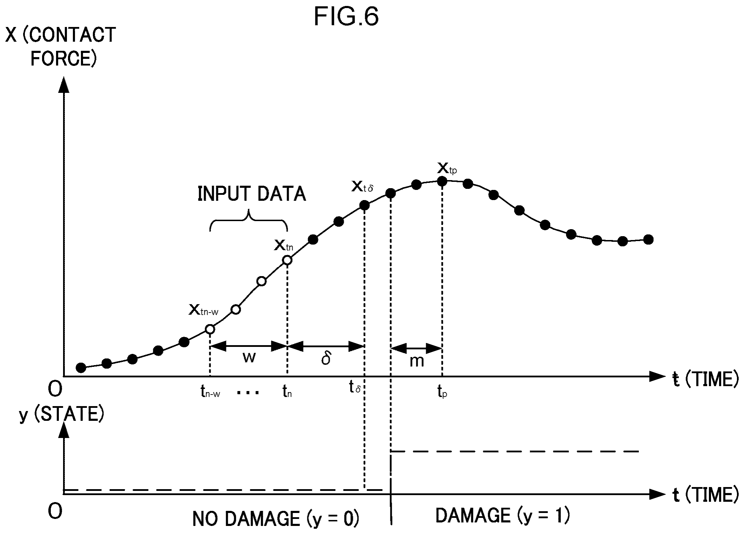

The prediction model 40 is an example in which a contact force is predicted. Fig. 6 is a graph illustrating an example of time series data of predicted contact force. In this example, as illustrated in Fig. 6, on being input with contact forces acquired in time period w up to a current time point $t_n$ as input data, the prediction model 40 predicts a contact force $x_{t\delta}$ obtained at $\delta$ seconds after the current time point $t_n$ (hereafter referred to as "predicted contact force") and a state y of the object T. $t_\delta$ is a future goal time. The state of the object T is whether or not damage has occurred to the object T. Moreover, hereafter a time at $\delta$ seconds after the current time point $t_n$ when the predicted contact force $x_{t\delta}$ is obtained is referred to as a "specific time". Note that an input window $X_{tw:t}$ is slid along the time axis, and $^\wedge y_{t\delta}$ is predicted. A predicted value $y_t$ is true when $T_p - m \le t_\delta$. Herein, m represents a safety margin that should be applied to cover an actual fracture point ahead of the peak.

A robot needs to stop before fracture. A robot accordingly stops closing the gripper GR at time step $T_p - m$. Herein, $T_p$ is a peak time and m is a safety margin that should be applied to cover a fracture timing. Namely, suppose that fracture occurs between $T_p - m$ and $T_p$. A first most time step of input observation is $t_w = t - w$, and a goal time step of fracture prediction is $t_\delta = t + \delta$. A fracture prediction problem is formulated as $y_{t\delta} = f(X_{tw:t})$, wherein $X_{tw:t} = \{X_{tw}, ..., x_t\}$ is a sequence of observation values from a tactile sensor S, and $y_{t\delta}$ takes two values. A value indicating whether or not a robot has exceeded the fracture timing is true when $T_p - m \le t_\delta$, and is false when not. The robot stops closing the gripper GR when $y_{t\delta}$ is true.

In a training phase, the training unit 33 uses the detection results for each of the objects T stored in the storage unit 32 to train the prediction model 40 that has been subjected to machine learning for predicting a time when damage occurs. Specifically, the training unit 33 generates the prediction model 40 by detecting a time series feature in the detection results and learning the times when the time series feature occurs. Note that the time series feature is a peak value detected first most after damage to the object T occurs and the contact force has exceeded a specific threshold. In the present exemplary embodiment, plural detection results are able to be acquired by using plural tactile sensors S. Moreover, the distributed tactile sensors are able to detect plural contact forces in a single run. Namely, the training unit 33 is able to execute machine learning employing plural detection results acquired in a single run.

For example, the training unit 33 uses the time series data of contact force of the plural reusable objects (observation value time series data) as training data. The time series data of contact forces include, as training data, plural contact forces at a specific time period, contact forces after δ seconds from the specific time period, and a peak value (supervised signal) of contact force for the object T. The training unit 33 executes machine learning using the training data and generates the prediction model 40. In the present exemplary embodiment, as described below, stepwise training is performed in the machine learning to train the prediction model 40. In the training unit 33, the prediction model 40 is pre-trained once, and then training is performed to update by domain generalization for part of a middle layer.

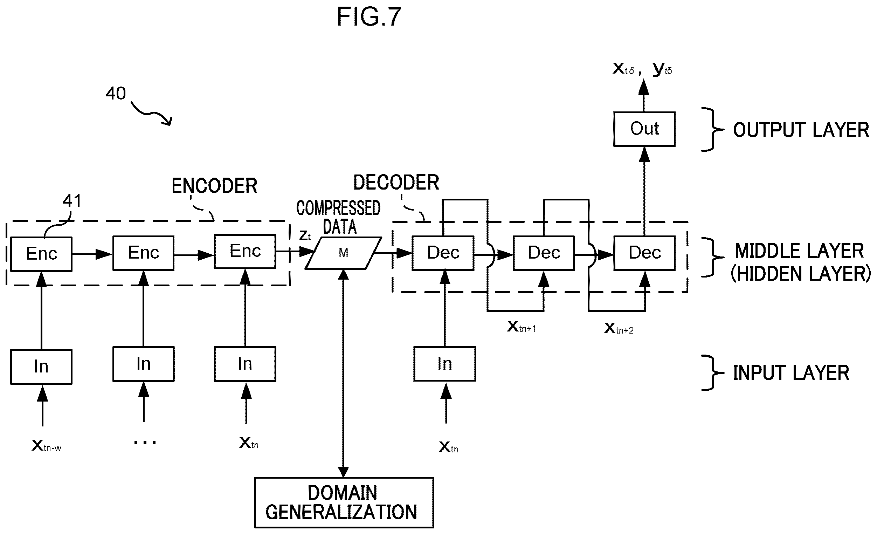

The prediction model 40 is a long-short-term-memory (LSTM), which is a time series network in which an encoder/decoder model is employed. The LSTM includes an input layer, a middle layer (hidden layer), and an output layer, as in the example illustrated in Fig. 7. Processing is performed in the middle layer to propagate already processed data to a different node 41. Moreover, in the middle layer the encoder/decoder model performs encoding processing to extract a feature from the input data and to compress the extracted feature into a vector of a predetermined dimensionality, and decoding processing to decode the feature contained in compressed data that had been compressed thereby. Output of the encoder is zt, and compressed data of $z_t$ is a fully-connected layer M. The prediction model 40 that is an encoder/decoder model employes past contact force in a specific time period to predict a contact force at a specific time, and to predict a determination of a state of the object T, and outputs these predictions.

The training unit 33 is input with training data, pre-trains an encoder/decoder, apply a machine learning method corresponding to domain generalization through meta-learning, and re-trains the fully-connected layer M. The machine learning method corresponding to domain generalization through meta-learning employs the MAML, MLDG method of Reference Document 1.

Reference Document 1: Li, D., Yang, Y., Song, Y. Z., & Hospedales, T. (2018, April). Learning to generalize: Meta-learning for domain generalization. In Proceedings of the AAAI conference on artificial intelligence (Vol. 32, No. 1).

In order to train the prediction model 40 efficiently and effectively, the entire model (E and M) is first pre-trained using all of the training data. Herein, E is an encoder and M is fully-connected layer. Then the parameters of the E are fixed, and only the parameters of the fully-connected layer M are updated using MLDG. Note that at the evaluation stage, a pre-trained model (model prior to meta-learning) is repurposed and employed as a baseline.

MLDG meta-learning partitions the learning target into meta-train of following Equation (1), and meta-test of following Equation (2). Herein, S is a source domain, and T is a target domain. The target domain T is assumed to be unknown. In meta-train, the source domain S is partitioned into S-V as a hypothetical test domain. Training assumes there to be a loss function 1 (^y, y) to a predicted numerical value related to label y. In order to avoid over fitting through meta-learning, the entire model is first pre-trained with the loss function 1. Moreover, the fully-connected layer M is updated by updating the parameters Θ as in Equation (3).

$$\mathcal{F}(.) = \frac{1}{S-V} \sum_{i=1}^{S-V} \frac{1}{N_i} \sum_{j=1}^{N_i} \ell_{\Theta}(\hat{y}_j^{(i)}, y_j^{(i)})$$

... Equation (1)

$$\mathcal{G}(\cdot) = \frac{1}{V} \sum_{i=1}^{V} \frac{1}{N_i} \sum_{j=1}^{N_i} \ell_{\Theta'}(\hat{y}_j^{(i)}, y_j^{(i)})$$

... Equation (2)

$$\Theta = \Theta - \gamma \frac{\partial(\mathcal{F}(\check{\tau}, \Theta) + \beta\mathcal{G}(\check{\tau}, \Theta - \alpha\mathcal{F}'(\check{\tau}, \Theta)))}{\partial\Theta}$$

... Equation (3)

Next, description follows regarding an example of a prediction embodiment by the prediction model 40. Specifically, the prediction model 40 employs the plural contact forces that were input to predict the contact force received from the object T and identifies a peak value $x_{tp}$ of the contact force. The prediction model 40 identifies a time tp when the

identified peak value $x_{tp}$ of the contact force occurs, and sets a range of a predetermined margin m from the identified time tp as a datum point. The prediction model 40 determines that damage occurs in cases in which a specific time $t_\delta$ when the predicted contact force $x_{t\delta}$ is obtained is contained within the margin m range from the time tp as a datum point. In other words, the prediction model 40 determines that damage has occurred (y = 1) at the specific time $t_\delta$ in cases in which above condition Tp - m $\leq$ t$\delta$ has been satisfied, and determines that damage has not occurred (y = 0) at the specific time $t_\delta$ in cases in which the condition is not satisfied.

Note that the margin m has been described for an embodiment in which it is predetermined. However, there is no limitation thereto. The margin m may be set according to the object T. For example, a mass of the object T may be measured and the margin m set according to the mass, or a density may be computed from a result obtained from emitting ultrasound at the object T, and the margin m set according to the density. Moreover, a size and a substance of the object T may be predicted from an image capturing the object T, and the margin m set according to the predicted size and substance. The mass, density, size, and substance of the object T are each an example of a feature value.

Moreover, in the exemplary embodiment, plural contact forces are obtained from a single object T due to employing the tactile sensor S1 and the tactile sensor S2 that are distributed tactile sensors. This means that the prediction model 40 predicts the peak value $x_{tp}$ detected first most after the respective contact force has exceeded a threshold in each of the plural contact forces. The prediction model 40 is able to determine the state of the object T using the peak value $x_{tp}$ detected first most from out of the predicted peak values $x_{tp}$ of the plural contact forces.

The prediction unit 34 inputs the contact force in the specific time period acquired by the acquisition unit 31 to the prediction model 40, and performs a determination of the state of the object T (whether or not damage occurs at the specific time).

In cases in which the prediction unit 34 has determined damage to occur at the specific time, the control unit 35 transmits an instruction to stop the motor M to the motor drive section 21, thereby controlling the gripping force occurring on the object T.

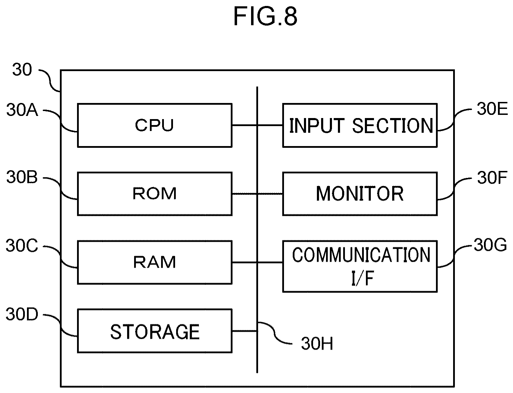

Next, description follows regarding a hardware configuration of the control device 30, with reference to Fig. 8. Fig. 8 is a block diagram illustrating a hardware configuration of the control device 30.

As illustrated in Fig. 8, the control device 30 includes a central processing unit (CPU) 30A, read only memory (ROM) 30B, random access memory (RAM) 30C, storage 30D, an input section 30E, a monitor 30F, and a communication interface (I/F) 30G. Each configuration is connected together through a bus 30H so as to be capable of communicating with each other.

A control program is stored in the storage 30D. The CPU 30A is a central processing unit that executes various programs and controls each configuration. Namely, the CPU 30A reads a program from the storage 30D, and executes the program using the RAM 30C as a work area. The CPU 30A controls each of the above configurations and performs various computation processing according to the program recorded in the storage 30D.

Various programs and various data are stored on the ROM 30B. The RAM 30C serves as a work area to temporarily store programs or data. The storage 30D is configured by a hard disk drive (HDD) or solid state drive (SSD), and is stored with various programs including an operating system and various data.

The input section 30E includes a keyboard, and a pointing device such as a mouse or the like,
and is employed to perform various inputs. The monitor 30F is, for example, a liquid crystal display, and displays various information such as a gripped state of the target object T or the like. The monitor 30F may also function as the input section 30E by employing a touch panel therefor.

The communication I/F 30G is an interface for performing communication with other devices, and employs a standard such as, for example, Ethernet (registered trademark), FDDI, or Wi-Fi (registered trademark).

Each of the functional configuration of the control device 30 illustrated in Fig. 2 is implemented by the CPU 30A reading the control program stored on the storage 30D, and expanding and executing the control program in the RAM 30C.

The control device 30 of the present exemplary embodiment employs plural reusable objects to acquire observation value time series data of a specific fracture process for each of the objects as the training data. Moreover, the control device 30 employs the training data to apply a machine learning method corresponding to domain generalization through meta-learning, and trains a prediction model for predicting a timing when a specific effect will occur in the target object.

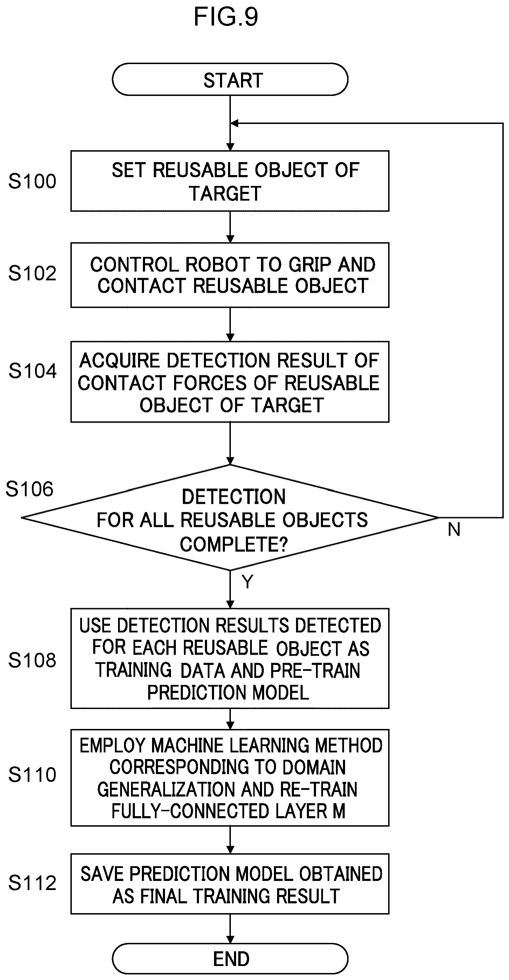

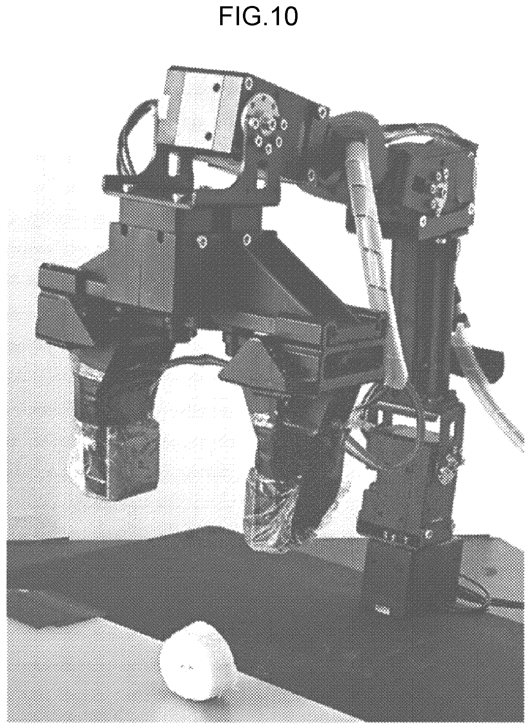

Next, description follows regarding operation of the control device 30, with reference to Fig. 9 and Fig. 10.

Fig. 9 is a flowchart illustrating a flow of the processing by the control device 30 to train the prediction model 40. When instructed to execute model generation processing by a user manipulating the input section 30E, the model training processing is executed as a control method by the CPU 30A reading the control program from the storage 30D, and expanding and executing the control program in the RAM 30C.

At step S100, the CPU 30A sets a reusable object for the detection target. Note that although a task of switching over the object is performed manually, it may be automated.

At step S102, the CPU 30A controls gripping of and contact with a reusable object as the target for the robot 20.

At step S104, the CPU 30A acquires detection results of contact forces of the target reusable object.

At step S106, the CPU 30A determines whether or not detection has ended for all of the reusable objects. Processing transitions to step S108 when detection has ended, and processing returns to step S100 when detection has not ended, the next target reusable object is set, and detection is repeated.

At step S108, the CPU 30A uses the detection results detected for each of the reusable objects as training data, and pre-trains the prediction model 40.

At step S110, the CPU 30A employs machine learning corresponding to domain generalization through meta-learning using the fully-connected layer M of the pre-trained prediction model 40 as input, and re-trains the fully-connected layer M.

At step S112, the CPU 30A saves the prediction model 40 that was finally obtained as the training result.

The control device 30 according to an exemplary embodiment of the present disclosure thereby trains the model using the reusable objects so as to enable various fragile objects to be gripped.

Test Examples

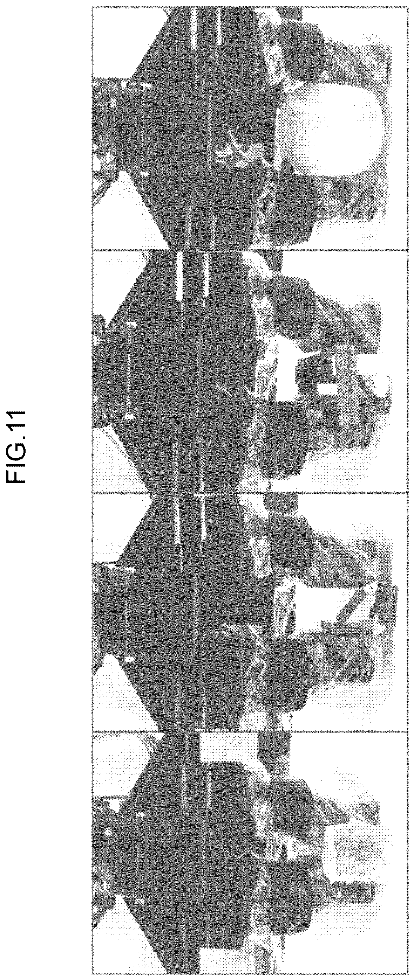

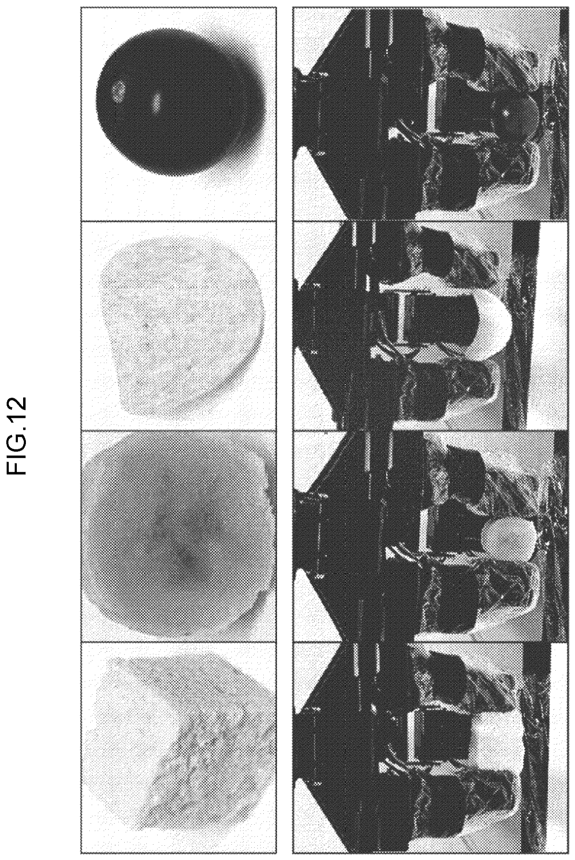

Food picking operations were performed by an actual robot in order the verify the proposed learning method of the present exemplary embodiment, and the success rate of the food picking using actual food products was evaluated. Fig. 10 illustrates an actual robot employed in tests. Fig. 11 illustrates an actual robot when each reusable object is gripped. Fig. 12 illustrates an actual robot when each food product is gripped.

In order to maintain diversity between physical categories, tofu, potato chip, tomato, and banana were selected as the picking targets. Testing was performed by performing gripping attempts 20 times for each of the four food products. The proposed method employing the prediction model 40 trained in the present exemplary embodiment, and a baseline (the prediction model prior to meta-learning) were compared, and the effectiveness of meta-learning was verified.

In these tests, placement at the same initial position and in the same orientation was aimed for, however there was some natural variation therein due to this being performed as a manual task. More detailed explanation will now be given regarding the shape and pose of the food products. Tofu was prepared with two types of cuboidal shape having the same height (from 20 mm to 30 mm) and depth (from 15 mm to 20 mm), but different widths (either 40 mm or 20 mm). Note that a width $\times$ depth face was always orientated facing downwards, and depth $\times$ height faces were contacted by the gripper. The potato chip was arranged in a pose concave facing upward. The banana cut in circular slices at a thickness of about from 7 mm to 15 mm so as to be fixed in shape. These slices were arranged such that a circular face faced forwards (namely, such that the gripper contacted the side faces). Lastly, the tomato was arranged such that the stalk side thereof was facing rearward. However, the stalk was removed in advance. Note that the tomatoes were sometimes slightly tilted due to being round. Tests were accordingly performed for five types of food product, these being tofu cuboid, tofu cube, banana, potato chip, and tomato.

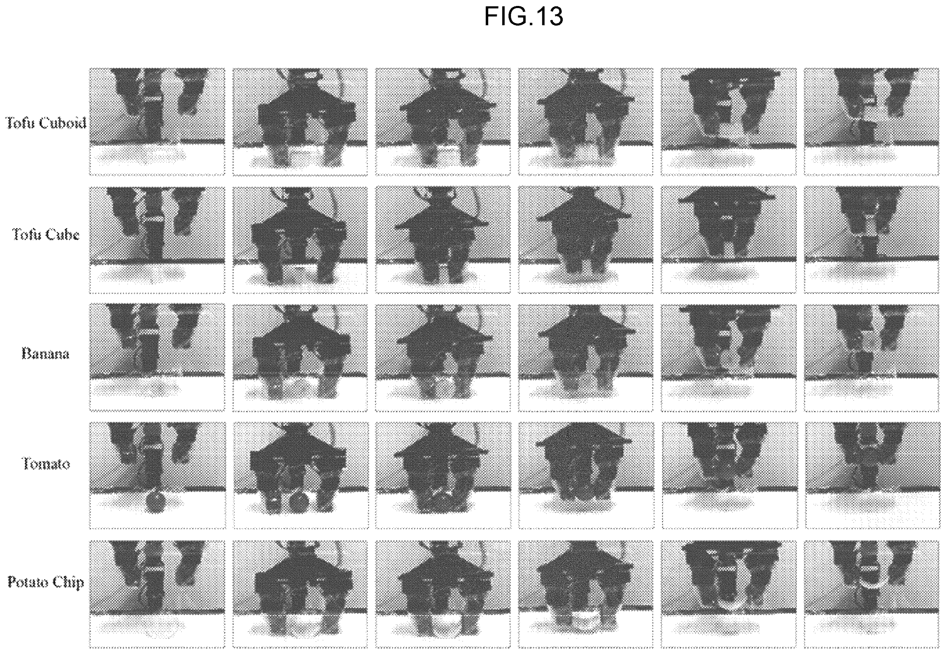

Fig. 13 illustrates snapshots during a picking success, and are drawings that confirmed which food product the robot was picking. It is apparent therefrom that the robot stopped closing of the gripper, and grasped the target object without fracture.

Table 1 illustrate picking performance as performed by the baseline and the proposed method for the five types of food product.

Table 1

| Test Food | Baseline | Ours |
|---|---|---|
| Tofu (cuboid) | 1/20 | **11**/20 |
| Tofu (cube) | 13/20 | **19**/20 |
| Bananas | 18/20 | **20**/20 |
| Tomatoes | **20**/20 | 16/20 |
| Potato Chips | 17/20 | **19**/20 |

In the tests a success was counted only when the target object was able to be grasped without being squashed, split, or torn, and a failure was counted in other cases. Note that throughout the testing the most frequent failure pattern was by fracture because the robot did not stop the gripper early enough.

Good performance was exhibited by the baseline model for banana, tomato, and potato chip. This indicates that diversity of reusable objects was already easily able to cover these food product objects. However, it is apparent that the domain generalization of the proposed method was able to further improve the success rate for banana and potato chip. The great improvement shown in the performance for tofu cuboids and tofu cubes indicates that the generalization ability of the prediction model 40 had been expanded by domain generalization.

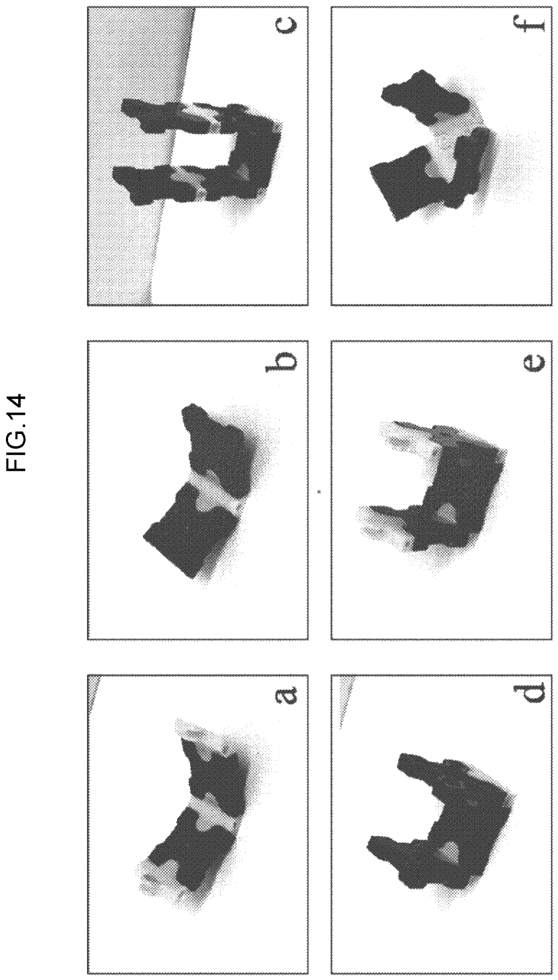

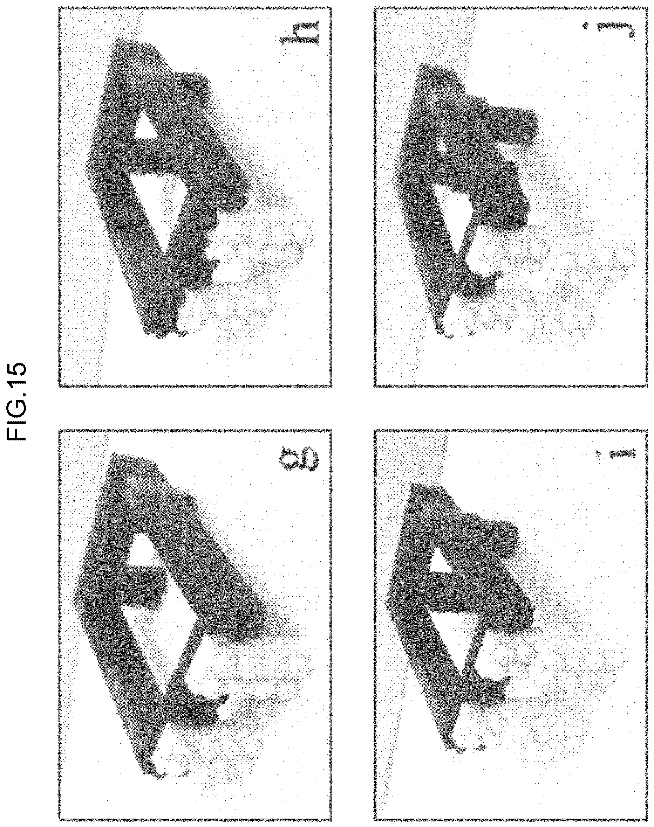

Note that in testing, damage tests were collected for 52 individual, 52 individual, and 49 individual damage tests during training of the prediction model 40, for toy blocks (two types), a ping-pong ball, and a jelly, respectively. Namely, a time matrix of a total of 205 individual tests was compiled. The damage tests collected for the toy blocks were configured from plural shapes of each different type, with 5 shapes of toy block 1 (ob2) and 4 shapes of toy block 2 (ob3), collected as training data. Fig. 14 and Fig. 15 are diagrams illustrating each shape of the toy blocks used in the tests. Training capable of covering within-category differences can be expected by changing the shapes of the toy blocks in this manner.

Note that the information processing executed in the above exemplary embodiment by a CPU reading software (a program), may be executed by various processors other than a CPU. Such processors include programmable logic devices (PLD) that allow circuit configuration to be modified post-manufacture, such as a field-programmable gate array (FPGA), and dedicated electric circuits, these being processors including a circuit configuration custom-designed to execute specific processing, such as an application specific integrated circuit (ASIC). Moreover, the information processing may be executed by any one of these various types of processors, or may be executed by a combination of two or more of the same type or different types of processors (such as plural FPGAs, or a combination of a CPU and an FPGA). The hardware structure of these various types of processors is more specifically an electric circuit combining circuit elements such as semiconductor elements.

Moreover, although in the above exemplary embodiment an embodiment has been described in which the program is pre-stored (installed) on a ROM or storage, there is no limitation thereto. The program may be provided in a format recorded on a non-transitory recording medium such as a compact disk read only memory (CD-ROM), digital versatile disk read only memory (DVD-ROM), universal serial bus (USB) memory, or the like. Moreover, the program according may be provided in a format downloadable from an external device over a network.

The entire content of the disclosures of Japanese Patent Application No. 2023-031440 filed on March 1, 2023 and Japanese Patent Application No. 2023-093498 filed on June 6, 2023 is incorporated by reference in the present specification. All publications, patent applications and technical standards mentioned in the present specification are incorporated by reference in the present specification to the same extent as if each individual publication, patent application, or technical standard was specifically and individually indicated to be incorporated by reference.

Explanation of Reference Numerals

10    robot system
20    robot
21    motor drive section
30    control device
31    acquisition unit
32    storage unit
33    training unit
34    prediction unit
35    control unit
40    prediction model
T     (reusable) object

**Claims**

1. A control device, configured to:

    use a plurality of reusable objects to acquire observation values in a specific fracture process for each of the objects as training data; and
    apply a machine learning method corresponding to domain generalization through meta-learning using the training data to train a prediction model for predicting a timing at which a specific effect will occur in a target object.

2. The control device of claim 1, wherein the training of the prediction model employs detection results of time series data of observation values acquired from each of the objects as the training data, pre-trains a prediction model using a time series network, designates output of an encoder of the time series network as a compressed fully-connected layer, and in meta-learning, fixes parameters of the encoder and updates parameters of the fully-connected layer.

3. The control device of claim 1, wherein at least two or more types of block that are reusable by re-assembling, a ping-pong ball that is reusable by returning to shape by expanding by heating, and a jelly that is reusable by heating and cooling, are employed as the plurality of reusable objects to acquire the observation values as the training data.

4.  The control device of claim 3, wherein the two or more types of block have a plurality of different shapes for each type for collection as the training data.

5.  A method of controlling processing executed by a computer, the processing comprising:

    using a plurality of reusable objects to acquire observation values in a specific fracture process for each of the objects as training data; and
    applying a machine learning method corresponding to domain generalization through meta-learning using the training data to train a prediction model for predicting a timing at which a specific effect will occur in a target object.

6.  A control program that causes a computer to execute processing comprising:

    using a plurality of reusable objects to acquire observation values in a specific fracture process for each of the objects as training data; and
    applying a machine learning method corresponding to domain generalization through meta-learning using the training data to train a prediction model for predicting a timing at which a specific effect will occur in a target object.

FIG.1

(ob1)  (ob2)  (ob3)  (ob4)

(a1)

(a2)

EP 4 674 580 A1

# FIG.2

# FIG.3

T

OBJECT
(REUSABLE)

30

GR

CONTROL DEVICE

GRIPPER

35

33

32

31

S(S1、S2)

TRAINING
UNIT

STORAGE
UNIT

ACQUISITION
UNIT

TACTILE
SENSOR

CONTROL
UNIT

34

PREDICTION
UNIT

40

PREDICTION
MODEL

21

MOTOR
DRIVE
SECTION

M

MOTOR

FIG.4

## FIG.5

(fd3)

(fd4)

(ob3)

(ob4)

# FIG.6

# FIG.7

EP 4 674 580 A1

FIG.8

30

30A — CPU

30B — ROM

30C — RAM

30D — STORAGE

30H

30E — INPUT SECTION

30F — MONITOR

30G — COMMUNICATION I/F

# FIG.9

START

S100　SET REUSABLE OBJECT OF TARGET

S102　CONTROL ROBOT TO GRIP AND CONTACT REUSABLE OBJECT

S104　ACQUIRE DETECTION RESULT OF CONTACT FORCES OF REUSABLE OBJECT OF TARGET

S106　DETECTION FOR ALL REUSABLE OBJECTS COMPLETE?　N

Y

S108　USE DETECTION RESULTS DETECTED FOR EACH REUSABLE OBJECT AS TRAINING DATA AND PRE-TRAIN PREDICTION MODEL

S110　EMPLOY MACHINE LEARNING METHOD CORRESPONDING TO DOMAIN GENERALIZATION AND RE-TRAIN FULLY-CONNECTED LAYER M

S112　SAVE PREDICTION MODEL OBTAINED AS FINAL TRAINING RESULT

END

# FIG.10

FIG.11

EP 4 674 580 A1

FIG.12

FIG.13

FIG.14

FIG.15

## INTERNATIONAL SEARCH REPORT

| International application No. |
| --- |
| **PCT/JP2024/006796** |

| A. | CLASSIFICATION OF SUBJECT MATTER |
| --- | --- |

*B25J 15/08*(2006.01)i; *B25J 9/16*(2006.01)i; *G06N 3/0442*(2023.01)i; *G06N 3/0455*(2023.01)i; *G06N 3/0985*(2023.01)i; *G06N 20/00*(2019.01)i

FI: B25J15/08 T; B25J9/16; G06N3/0442; G06N3/0455; G06N3/0985; G06N20/00

According to International Patent Classification (IPC) or to both national classification and IPC

| B. | FIELDS SEARCHED |
| --- | --- |

Minimum documentation searched (classification system followed by classification symbols)

B25J15/08; B25J9/16; G06N3/0442; G06N3/0455; G06N3/0985; G06N20/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | ISHIKAWA, Reina et al. Learning by Breaking: Food Fracture Anticipation for Robotic Food Manipulation. IEEE Access. 16 September 2022, vol. 10, pp. 99321-99329, internet: <URL: https://ieeexplore.ieee.org/document/9894412>, <DOI: 10.1109/ACCESS.2022.3207491> p. 99321, left column, line 1 to p. 99328, right column, line 4, fig. 1-10 | 1-6 |
| Y | JP 2022-82464 A (NAVER CORPORATION) 01 June 2022 (2022-06-01) paragraphs [0034]-[0163], fig. 1-10 | 1-6 |
| A | JP 2019-49904 A (SHINSHU UNIVERSITY) 28 March 2019 (2019-03-28) entire text, all drawings | 1-6 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 April 2024** | **16 April 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/006796**

| Patent document cited in search report | | | Publication date (day/month/year) | Patent family member(s) | Publication date (day/month/year) |
|---|---|---|---|---|---|
| JP | 2022-82464 | A | 01 June 2022 | US 2022/0161423 A1 paragraphs [0044]-[0154], fig. 1-10 KR 10-2022-0069823 A | |
| JP | 2019-49904 | A | 28 March 2019 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019188587 A
- JP 2023031440 A

- JP 2023093498 A

**Non-patent literature cited in the description**

- **LI, D.** ; **YANG, Y.** ; **SONG, Y. Z.** ; **HOSPEDALES, T.** Learning to generalize: Meta-learning for domain generalization. *Proceedings of the AAAI conference on artificial intelligence*, April 2018, vol. 32 (1)